# FASCICULE DE BREVET EUROPEEN

(11) **EP 0 957 293 B1**
(45) Date de publication et mention de la délivrance du brevet: **27.11.2002**
(21) Numéro de dépôt: 99401141.9
(22) Date de dépôt: 10.05.1999
(51) Int. Cl.: F16H 25/20, B64C 13/50

(54) **Actionneur électro-mécanique du type à système vis/écrou**
Elektromagnetische Betätigungseinrichtung mit Gewindespindelantrieb
Electromagnetic screw-nut actuator

(30) Priorité: 12.05.1998 FR 9805942
(43) Date de publication de la demande: 17.11.1999
(73) Titulaire: TRW Systemes Aeronautiques Civils, 95310 St Ouen l'Aumone (FR)
(72) Inventeur: Rodrigues, Fernand, 95230 Soisy sous Montmorency (FR)
(74) Mandataire: Schrimpf, Robert

(56) Documents cités:
- EP-A- 0 025 750
- EP-A- 0 325 027
- EP-A- 0 569 775

## Description

La présente invention est relative aux actionneurs électromécaniques du type à système vis/écrou.

On souhaite, notamment dans le domaine de l'aéronautique, pouvoir remplacer les commandes hydrauliques par des commandes électromécaniques.

En particulier, il a déjà été proposé d'utiliser des actionneurs électromécaniques du type à système vis/écrou pour commander les mouvements de gouvernes d'aéronefs ou encore pour manoeuvrer des trains d'atterrissage.

Bien entendu, de tels actionneurs doivent être particulièrement sécurisés.

C'est pourquoi les actionneurs électromécaniques sont généralement montés par paire, l'un des actionneurs d'une paire étant un actionneur passif susceptible de prendre le relais de l'autre actionneur lorsque celui-ci est défaillant.

Toutefois, l'actionneur passif est autant sollicité mécaniquement que l'actionneur actif et il peut arriver, notamment dans le cas des commandes de vols primaires dont les volets sont sollicités en permanence, que les deux actionneurs soient simultanément défaillants.

La probabilité d'un tel incident est faible. Toutefois, pour limiter les conséquences qu'il pourrait avoir, on veut pouvoir débrayer la commande des organes qui risqueraient de se trouver bloqués par une défaillance des actionneurs. Notamment, on veut pouvoir, pour tous les types d'incidents se produisant sur les actionneurs, libérer les volets de commande de vol et éviter que ceux-ci ne se retrouvent bloqués en bout de course.

On connaît déjà des structures d'actionneurs électromécaniques du type à système vis/écrou dans lesquelles il est possible de désaccoupler la vis par rapport à l'ensemble moto-réducteur qui l'entraîne de sorte que si celui-ci se grippe, la vis reste libre en rotation et l'organe commandé ne se retrouve pas bloqué.

On pourra par exemple à cet égard se référer à la demande de brevet européen EP 555 122.

Toutefois, la structure décrite dans cette demande de brevet ne permet pas de libérer l'organe commandé dans le cas où l'incident est dû à un blocage de l'écrou par rapport à la vis.

Une structure d'actionneur répondant à ce problème est connue de la demande EP 0 325 027 divulgant toutes les caractéristiques du préambule de la revendication 1.

L'invention propose également une structure d'actionneur qui permet un débrayage de l'écrou par rapport à la structure qu'il entraîne en translation axiale.

A cet effet, l'invention propose une structure d'actionneur électro-mécanique comportant une vis entraînée en rotation, un écrou qui est entraîné en translation par la rotation de la vis, une tige-guide qui est entraînée en translation par l'écrou, caractérisé en ce qu'il comporte une pluralité de rouleaux interposés entre la tige-guide et l'écrou, ces rouleaux présentant une succession de gorges et filets annulaires, tandis que la surface externe de l'écrou et la surface interne de la tige-guide présentent une pluralité de gorges et filets complémentaires, les gorges et filets des rouleaux coopérant avec les gorges et filets de l'écrou et de la tige-guide pour transmettre à l'écrou l'effort axial sur la tige-guide lorsque lesdits rouleaux sont dans une position non débrayée, l'écrou et/ou la tige-guide présentant des rainures de débrayage dont la position angulaire est destinée à coïncider avec celle des rouleaux lorsque ceux-ci sont débrayés, ces rainures étant telles qu'elles permettent le désengagement d'au moins certains des gorges et filets pour libérer la tige-guide en translation par rapport à l'écrou, l'actionneur comportant des moyens permettant de faire rouler lesdits rouleaux de leur position non débrayée à leur position débrayée.

Cet actionneur est avantageusement complété par les différentes caractéristiques suivantes prises seules ou selon toutes leurs combinaisons techniquement possibles :
- l'actionneur présente une pièce intermédiaire définissant une pluralité de cages dans lesquelles les rouleaux sont reçus ;
- il comporte trois rouleaux par cage qui dans leur position non débrayée sont pour deux d'entre eux en appui sur la surface interne de la tige-guide, tandis que le troisième rouleau est en appui sur la surface externe de l'écrou, les gorges et filets du troisième rouleau coopérant avec les gorges et filets des deux autres rouleaux ;
- la pièce intermédiaire présente un secteur qui s'étend à l'extérieur de la tige-guide et qui coopère avec des moyens formant pignon qui permettent de faire basculer ladite pièce intermédiaire et les rouleaux de la position débrayée à la position non débrayée ;
- il comporte un ou plusieurs pions qui s'étendent radialement à travers la tige-guide et dont l'extrémité est reçue dans un logement de l'écrou, le ou lesdits pion(s) empêchant la rotation de la tige-guide par rapport à l'écrou ;
- la pièce intermédiaire comporte des moyens formant ressort qui exercent sur les rouleaux un effort radial destiné à les repousser dans des rainures de débrayage que présentent la tige-guide ou l'écrou ;
- les rainures sont ménagées sur la surface interne de la tige-guide ;
- il comporte une broche qui s'étend à travers la tige-guide et dont l'extrémité est reçue dans un logement que présente l'écrou, ladite broche empêchant la rotation de la tige-guide par rapport à l'écrou, des moyens permettant de déplacer ladite broche pour la désengager par rapport à l'écrou ;
- lesdits moyens permettant le déplacement de ladite broche comportent un pignon suiveur apte à coulisser le long d'une tige de commande destinée à l'entraîner en rotation ;
- en variante, la broche termine un bras formant levier sur lequel un ressort précontraint exerce un couple de basculement, des moyens motorisés permettant de commander la libération du basculement dudit bras.

L'actionneur proposé par l'invention est avantageusement utilisé dans les systèmes nécessitant des actionneurs embarqués sur des engins mobiles, tel que notamment, mais non limitativement, des aéronefs.

D'autres caractéristiques et avantages de l'invention ressortiront encore de la description qui suit. Cette description est purement illustrative et non limitative. Elle doit être lue en regard des dessins annexés sur lesquels :
- la figure 1 est une représentation synoptique d'une structure pour l'actionnement d'une gouverne d'aéronef ;
- la figure 2 est une vue en coupe axiale d'un actionneur du type de celui représenté schématiquement sur la figure 1 (coupe II-II de la figure 3) ;
- la figure 3 est une vue en coupe selon la ligne III-III de la figure 2 ;
- la figure 4 est une vue en coupe selon la ligne IV-IV de la figure 2 ;
- la figure 5 est une représentation semblable à celle de la figure 2 illustrant une autre variante possible de l'invention ;
- la figure 6 est une vue en coupe partielle selon la ligne VI-VI de la figure 5 ;
- la figure 7 est une vue semblable à celle de la figure 6 illustrant la variante des figures 5 et 6 dans sa position débrayée.
- la figure 8 est une représentation schématique illustrant un autre mode de réalisation possible pour la commande de la broche de la variante des figures 5 à 7.

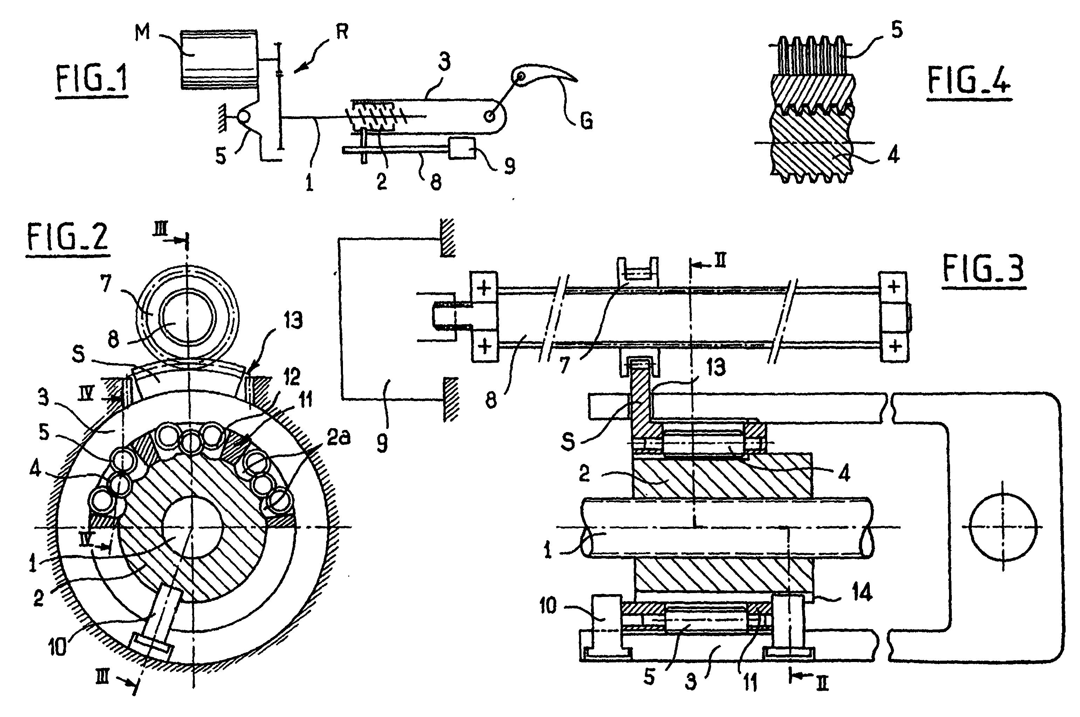

L'actionneur qui est illustré sur la figure 1 est un actionneur pour la commande d'une gouverne G d'aéronef.

Cet actionneur comporte une vis 1 qui est montée rotative par rapport à la structure S de l'avion et qui est entraînée en rotation autour de son axe par un ou plusieurs moteurs électriques M et des moyens de réduction R.

La vis 1 coopère avec un écrou 2 qui lui-même est solidaire dune tige-guide 3 qui est libre en translation par rapport à la structure de l'avion et qui est reliée à la gouverne G par une liaison qui est telle que le déplacement en translation de l'écrou 2 et de la tige-guide 3 sous l'effet de la rotation de la vis 1 entraîne le déplacement de la gouverne G.

Le système vis/écrou peut être un système à billes, à rouleaux ou à profils conjugués : trapézoïdal, carré ou profil iso.

Alors que dans les structures d'actionneur connues de l'art antérieur, la tige-guide est généralement d'une pièce avec l'écrou, ou fixée à celui-ci, dans la structure qui est représentée sur les figures 2 à 4, la tige-guide 3 et l'écrou 2 sont deux pièces distinctes coaxiales qui sont reliées l'une à l'autre par des moyens qui sont débrayables pour autoriser le cas échéant un déplacement en translation de la tige-guide 3 par rapport à l'écrou 2.

Plus particulièrement, une pièce annulaire 11 qui définit une pluralité de cages 12 de rotation pour des rouleaux 4 et 5 est interposée avec un léger jeu radial entre ladite tige-guide 3 et l'écrou 2.

Ces cages 12 sont régulièrement réparties sur tout le pourtour de ladite pièce 11. Chacune reçoit deux rouleaux 5 et un rouleau 4 ; ces rouleaux 4, 5 sont des rouleaux intermédiaires qui sont montés rotatifs dans lesdites cages 12 et qui s'étendent parallèlement à l'axe commun à l'écrou 2, la tige-guide 3 et la vis 1.

Les deux rouleaux 5 sont en appui sur la surface interne de la tige-guide 3, ainsi que sur le rouleau 4 ; le rouleau 4 est quant à lui en appui sur les deux rouleaux 5, ainsi que sur la face externe de l'écrou 2.

Les rouleaux 4 et 5 présentent chacun, ainsi qu'illustré sur la figure 4, une pluralité de gorges annulaires qui définissent entre elles des filets qui s'étendent selon des plans médians perpendiculaires à l'axe desdits rouleaux. Les gorges et filets des rouleaux 4 et 5 sont de forme complémentaire ; lorsque les rouleaux 4 et 5 sont dans leur position non débrayée, qui est représentée sur les figures 2 à 4, les filets du rouleau 4 sont reçus sans jeu dans les gorges des rouleaux 5, tandis que les filets des rouleaux 5 sont reçus sans jeu dans les gorges du rouleau 4.

De même, la surface interne de la tige-guide 3 et la surface externe de l'écrou 2 présentent toutes deux une succession de gorges et de filets annulaires complémentaires de ceux des rouleaux 4 et 5; dans la position non débrayée des rouleaux 4 et 5, les filets du rouleau 4 sont reçus sans jeu dans les gorges de l'écrou 2, tandis que les filets des rouleaux 5 sont reçus sans jeu dans les gorges de la tige-guide 3.

L'entrelacement des gorges et filets des rouleaux 4 et 5, de la tige-guide 3 et de l'écrou 2 rend ledit écrou solidaire de la tige-guide 3 dans son déplacement axial.

Et lors d'un déplacement de l'écrou 2, les contraintes sont réparties sur l'ensemble des génératrices de contact entre l'écrou 2 et les différents rouleaux 4 répartis sur le pourtour dudit écrou, ainsi que sur les génératrices de contact entre les rouleaux 5 et sur les rouleaux 4 et les génératrices de contact entre les rouleaux 5 et la tige-guide 3.

Grâce à cette multitude de contacts, l'effort axial est réparti sur toute la périphérie de l'écrou 2.

On notera que le profil des gorges et filets des rouleaux 4, 5 (inclinaison par rapport à l'axe des rouleaux) est optimisé pour d'une part minimiser les efforts radiaux entre rouleaux dus à l'effort axial et d'autre part distribuer l'effort axial autour et sur la longueur de l'écrou.

L'écrou 2 présente une pluralité de rainures 2a qui s'étendent selon des génératrices dudit écrou 2 en étant régulièrement réparties à la périphérie de celui-ci. Le nombre de ces rainures est égal à deux fois le nombre de cages 12.

En position non débrayée, les portions de la périphérie de l'écrou 2 qui se trouvent entre deux rainures 2a sont en regard d'une paroi de la pièce 11 qui sépare deux cages 12 successives ou en regard d'un rouleau 4 en appui sur ladite périphérie.

Ces rainures 2a sont destinées à recevoir les rouleaux 4 en position débrayée. Elles sont plus profondes que les gorges de l'écrou 2 et des rouleaux 4 et 5, de sorte que les gorges et filets desdits rouleaux 4 sont désengagés par rapport aux gorges et filets de l'écrou 2 lorsque lesdits rouleaux 4 sont dans leur position débrayée et que lesdits rouleaux 4, les rouleaux 5 et la tige-guide 3 peuvent alors se déplacer librement en translation par rapport à l'écrou 2.

A une extrémité, la tige 3 présente une ouverture 13 dans laquelle s'étend un secteur S qui prolonge radialement la pièce annulaire 11.

L'ouverture 13 présente des butées qui permettent de limiter le débattement en rotation du secteur S.

Ce secteur S coopère avec un pignon suiveur 7 qui est monté libre en coulissement sur un arbre d'entraînement 8. La liaison entre le pignon et la tige peut être du genre à cannelure ou à douille à billes pour éviter le frottement.

L'entraînement en rotation de cet arbre 8 par des moyens moteur 9 permet de faire basculer le secteur cranté S et la pièce 11 et par conséquent de faire passer les cages 12 d'une position où les rouleaux 4 et 5 sont non débrayés à une position où les rouleaux 4 sont en regard des rainures 2a et où lesdits rouleaux 4 et 5 sont débrayés.

Lors du débrayage de la tige-guide 3 et de l'écrou 2, les rouleaux 4, 5 roulent sans glissement sur l'écrou 2 et à l'intérieur de la tige-guide 3 et les frottements sont minimisés.

En outre, il est prévu un ou plusieurs pions 10 qui s'étendent d'une part à travers la tige-guide 3 et d'autre part à travers une rainure axiale 14 ménagée à la surface externe de l'écrou 2.

Ces pions 10 empêchent la rotation de la tige-guide 3 par rapport audit écrou 2.

Lorsque l'actionneur fonctionne normalement et active la gouverne, le pignon 7 coulisse librement sur la tige 8. Pour désolidariser la tige 3 de l'écrou 2, le moteur électrique 9 entraîne en rotation les pièces 8, 7, 6, 5 et 4. Une butée sur la tige limite le débattement du secteur S.

Après cette rotation, la position des rouleaux 4 coïncide avec la position des rainures 2a de l'écrou. Dans cette position les rouleaux 4 n'ont plus d'appui axial sur les rainures de l'écrou. La tige-guide 3 peut donc se déplacer axialement sans entraîner l'écrou 2.

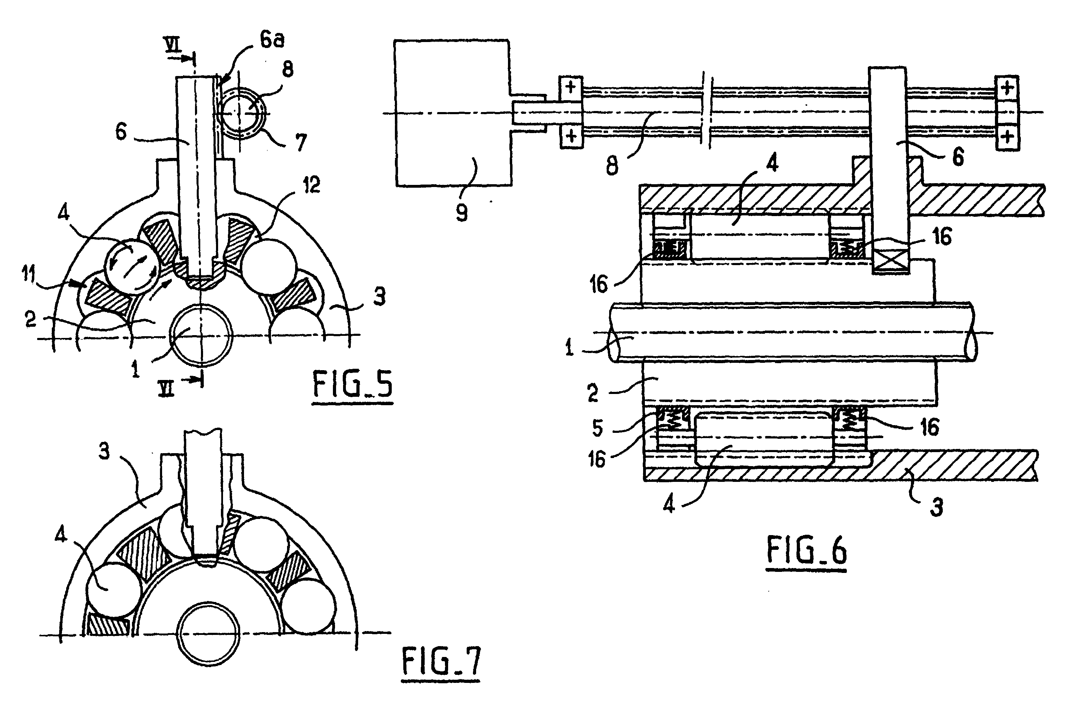

Dans le mode de réalisation qui est illustré sur les figures 5 à 7, les cages 12 définies par la pièce intermédiaire ne reçoivent chacune qu'un seul rouleau 4 interposé entre l'écrou 2 et la tige-guide 3.

La surface externe de l'écrou 2 et la surface interne de le tige-guide 3 présentent une pluralité de gorges et filets annulaires perpendiculaires à leur axe, qui coopèrent avec des gorges et filets complémentaires que présentent les rouleaux 4 pour, dans la position non débrayée de ceux-ci, transmettre à l'écrou 2 l'effort axial sur la tige-guide 3.

A une de ses extrémités axiales, l'écrou 2 présente un logement dans lequel est reçue l'extrémité d'une clavette ou broche anti-rotation 6 qui s'étend à travers la tige-guide 3.

Cette broche 6 se termine par une crémaillère 6a qui coopère avec un pignon 7 suiveur monté coulissant sur une tige de commande 8 entraînée par des moyens moteurs 9.

Les cages 12 maintiennent en place les rouleaux. Un jeu axial et radial subsiste entre lesdites cages et les rouleaux. Un déplacement radial des rouleaux par rapport à la cage est possible.

Les rouleaux 4 sont montés entre l'écrou et la tige sans jeu axial.

Des ressorts 16 sont montés dans lesdites cages 12 et exercent sur lesdits rouleaux 4 un effort radial dirigé vers l'extérieur pour repousser lesdits rouleaux sur la tige-guide 3.

Celle-ci présente une pluralité de rainures 11 qui s'étendent selon ses génératrices et qui sont destinées à recevoir les rouleaux 4 dans la position débrayée de ceux-ci.

Ces rainures 11 sont plus profondes que les gorges et filets des rouleaux 4 et de l'écrou 2, de sorte que les gorges et filets des rouleaux 4 sont désengagés par rapport ceux de l'écrou 2 lorsque les rouleaux 4 sont au fond desdites rainures 11.

En fonctionnement normal, la tige 3 coulisse axialement dans un carter qui est fixe par rapport à la structure de l'aéronef, un bossage 17 assurant l'anti-rotation de ladite tige-guide 3 par rapport audit carter.

L'effort axial est transmis à l'écrou 2 par l'intermédiaire des rouleaux 4. La broche anti-rotation 6 assure la liaison en rotation entre l'écrou 2 et la tige 3. Lors du déplacement axial de l'écrou 2, la broche 6 coulisse sans frottement le long de la tige 8.

Le débrayage se fait de la manière suivante.

Le moteur électrique 9 met en rotation la tige de commande 8. Celle-ci entraîne en translation la broche 6 par l'intermédiaire du pignon crémaillère 7 (ou de tout autre dispositif), jusqu'au dégagement complet de la broche 6 par rapport à son logement dans l'écrou 2. L'ensemble vis/écrou est alors libre en rotation. Le mouvement en rotation du moteur de commande de la gouverne provoque la rotation par rapport à la tige-guide 3 l'écrou 2 et de la vis 1 grippée par rapport audit écrou.

Lorsque la position des rouleaux 4 coïncide avec les rainures axiales de la tige-guide 3, les ressorts de rappel 16 repoussent les rouleaux 4 dans les rainures 11 de la tige. La profondeur des rainures est telle que lorsque les rouleaux sont placés dans le fond de ces rainures, les rouleaux sont totalement dégagés des gorges de l'écrou. Dans cette configuration la tige peut se déplacer librement par rapport à l'écrou.

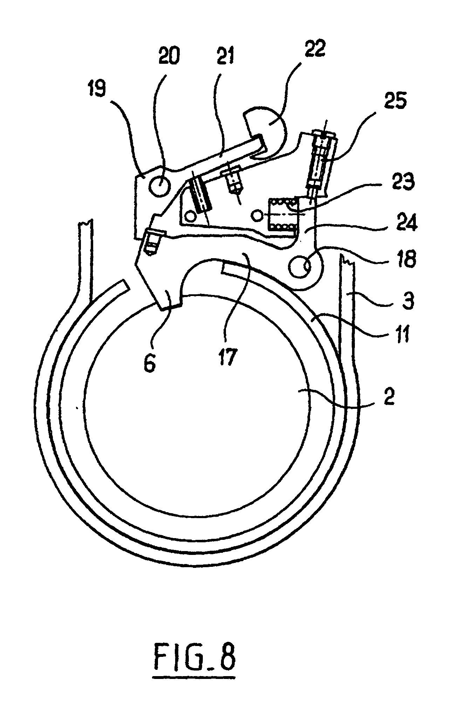

Un autre mode de réalisation de la commande de la broche 6 de la variante représentée sur les figures 5 à 7 est illustré sur la figure 8.

Dans ce mode de réalisation, la broche 6 termine un bras 17 formant levier articulé en pivotement autour d'un axe 18 parallèle à l'axe de la vis 1. Cet axe est situé dans un plan qui, au point où la broche 6 s'engage dans l'écrou 2, est tangent audit écrou 2.

Le bras 17 qui se termine par la broche 6 est normalement maintenu dans sa position où la broche 6 n'est pas débrayée par rapport à l'écrou 2 par un organe formant butée 19. Cet organe formant butée 19 est alors en appui sur le bras 17 pour empêcher tout mouvement de basculement qui libérerait l'écrou 2.

Cet organe 19 formant butée est lui aussi monté pivotant autour d'un axe référencé par 20 - parallèle à l'axe 1 - à son extrémité opposée à sa partie destinée à venir en appui sur le bras 17, l'organe 19 présente une partie 21 formant levier dont l'extrémité coopère avec un élément 22 formant came.

Lorsque - comme c'est normalement le cas - la broche 6 est engagée dans l'écrou 2, aucun couple d'effort n'est transmis à l'axe de commande 21 par le blocage que réalise la broche 6 dans l'écrou 2.

L'élément 22 formant came est relié mécaniquement à un moteur qui, pour commander le débrayage de la tige-guide 3, entraîne en rotation la came 22 de façon à ce que l'élément 19 se soulève par rapport au bras 17.

Un ressort 23 précontraint en compression, en appui contre une portion 24 en retour qui s'étend à partir du bras 17, fait alors basculer ledit bras 17 et désengage la broche 6 par rapport à l'écrou 2.

Une clavette 25 s'engage alors dans un trou (non représenté) qui termine ladite portion 24 formant retour. Le bras 17 se trouve de ce fait verrouillé dans sa position où la broche 6 est désengagée par rapport à l'écrou 2.

On notera qu'avec une structure du type de celle qui vient d'être décrite, l'énergie nécessaire pour désengager la broche 6 par rapport à l'écrou 2 est très faible.

On notera par ailleurs, qu'avec les dispositifs qui viennent d'être décrits, il faut, pour que la déconnexion gouverne/actionneur ne puisse s'effectuer, deux événements simultanés, à savoir, selon les modes de réalisation concernés, soit à la fois le grippage de la vis par rapport à écrou et une panne du moteur principal d'activation de la gouverne, soit à la fois le grippage vis/écrou et une panne du moteur de déconnexion.

## Revendications

1. Actionneur électro-mécanique comportant une vis (1) entraînée en rotation, un écrou (2) qui est entraîné en translation par la rotation de la vis (1), une tige-guide (3) qui est entraînée en translation par l'écrou (2), **caractérisé en ce qu'**il comporte une pluralité de rouleaux (4, 5) interposés entre la tige-guide (3) et l'écrou (2), ces rouleaux (4, 5) présentant une succession de gorges et filets annulaires, tandis que la surface externe de l'écrou (2) et la surface interne de la tige-guide (3) présentent une pluralité de gorges et filets complémentaires, les gorges et filets des rouleaux (4, 5) coopérant avec les gorges et filets de l'écrou (2) et de la tige-guide (3) pour transmettre à l'écrou (2) l'effort axial sur la tige-guide (3) lorsque lesdits rouleaux (4, 5) sont dans une position non débrayée, l'écrou (2) et/ou la tige-guide (3) présentant des rainures de débrayage (2a) dont la position angulaire est destinée à coïncider avec celle des rouleaux (4, 5) lorsque ceux-ci sont débrayés, ces rainures étant telles qu'elles permettent le désengagement d'au moins certains des gorges et filets pour libérer la tige-guide (3) en translation par rapport à l'écrou (2), l'actionneur comportant des moyens permettant de déplacer lesdits rouleaux (4, 5) de leur position non débrayée à leur position débrayée.

2. Actionneur selon la revendication 1, **caractérisé en ce qu'**il présente une pièce intermédiaire (11) définissant une pluralité de cages (12) dans lesquelles les rouleaux sont reçus.

3. Actionneur selon la revendication 2, **caractérisé en ce qu'**il comporte trois rouleaux (4, 5) par cage (12) qui dans leur position non débrayée sont pour deux d'entre eux (4) en appui sur la surface interne de la tige-guide (3), tandis que le troisième rouleau (5) est en appui sur la surface externe de l'écrou (2), les gorges et filets du troisième rouleau (5) coopérant avec les gorges et filets des deux autres rouleaux (4).

4. Actionneur selon l'une des revendications 2 ou 3, **caractérisé en ce que** la pièce intermédiaire (11) présente un secteur (S) qui s'étend à l'extérieur de la tige-guide (3) et qui coopère avec des moyens formant pignon (7, 8) qui permettent de faire basculer ladite pièce intermédiaire (11) et les rouleaux de la position débrayée à la position non débrayée.

5. Actionneur selon la revendication 4, **caractérisé en ce qu'**il comporte un ou plusieurs pions (10) qui s'étendent radialement à travers la tige-guide (3) et dont l'extrémité est reçue dans un logement de l'écrou (2), le ou lesdits pion(s) (10) empêchant la rotation de la tige-guide par rapport à l'écrou.

6. Actionneur selon l'une des revendications 1 à 3, **caractérisé en ce que** la pièce intermédiaire comporte des moyens formant ressort (16) qui exercent sur les rouleaux (4) un effort radial destiné à les repousser dans des rainures de débrayage que présentent la tige-guide ou l'écrou.

7. Actionneur selon la revendication 6, **caractérisé en ce que** les rainures sont ménagées sur la surface interne de la tige-guide (3).

8. Actionneur selon l'une des revendications 6 ou 7, **caractérisé en ce qu'**il comporte une broche (6) qui s'étend à travers la tige-guide et dont l'extrémité est reçue dans un logement que présente l'écrou (2), ladite broche (6) empêchant la rotation de la tige-guide (3) par rapport à l'écrou (2), des moyens permettant de déplacer ladite broche (6) pour la désengager par rapport à l'écrou.

9. Actionneur selon la revendication 8, **caractérisé en ce que** lesdits moyens permettant le déplacement de ladite broche (6) comportent un pignon suiveur (7) apte à coulisser le long d'une tige de commande (8) destinée à l'entraîner en rotation.

10. Actionneur selon la revendication 8, **caractérisé en ce que** la broche termine un bras (17) formant levier sur lequel un ressort précontraint (23) exerce un couple de basculement, des moyens motorisés (19, 22) permettant de commander la libération du basculement dudit bras.

11. Actionneur embarqué sur un engin mobile tel que notamment un aéronef **caractérisé en ce qu'**il est constitué par un actionneur selon l'une des revendications précédentes.

## Claims

1. An electromechanical actuator comprising a screw (1) that is driven in rotation, a nut (2) that is driven in translation by rotation of the screw (1), and a guide rod (3) which is driven in translation by the nut (2), the actuator being **characterized in that** it has a plurality of rollers (4, 5) interposed between the guide rod (3) and the nut (2), said rollers having a succession of annular grooves and ridges, while the outside surface of the nut (2) and the inside surface of the guide rod (3) have respective pluralities of complementary grooves and ridges, the grooves and ridges of the rollers (4, 5) co-operating with the grooves and ridges of the nut (2) and of the guide rod (3) to transmit axial force on the guide rod (3) to the nut (2) when said rollers (4, 5) are in an engaged position, the nut (2) and/or the guide rod (3) having release channels (2a) in angular positions that are designed to coincide with the positions of the rollers (4, 5) when they are declutched, said channels being such that they enable at least some of the grooves and ridges to be disengaged so as to release the guide rod (3) to move in translation relative to the nut (2), the actuator including means enabling said rollers (4, 5) to be moved from their clutched position to their declutched position.

2. An actuator according to claim 1, **characterized in that** it has an intermediate piece (11) defining a plurality of cages (12) in which the rollers are received.

3. An actuator according to claim 2, **characterized in that** it has three rollers (4, 5) per cage (12), with the rollers in the clutched position comprising two rollers (5) pressing against the inside surface of the guide rod (3) while the third roller (4) presses against the outside surface of the nut (2), the grooves and ridges of the third roller (4) co-operating with the grooves and ridges of the other two rollers (5).

4. An actuator according to claim 2 or 3, **characterized in that** the intermediate piece (11) has a sector (S) which extends outside the guide rod (3) and which co-operates with gearwheel-forming means (7, 8) enabling said intermediate piece (11) to be tilted and enabling the rollers to be moved from the declutched position to the clutched position.

5. An actuator according to claim 4, **characterized in that** it includes one or more pegs (10) extending radially through the guide rod (3) and having one end received in a respective housing in the nut (2), said peg(s) (10) preventing the guide rod form rotating relative to the nut.

6. An actuator according to any one of claims 1 to 3, **characterized in that** the intermediate part has spring-forming means (16) applying a radial force on the rollers (4) to urge them into the declutching channels presented in the guide rod or in the nut.

7. An actuator according to claim 6, **characterized in that** the channels are formed in the inside surface of the guide rod (3).

8. An actuator according to claim 6 or 7, **characterized in that** it includes a pin (6) extending through the guide rod and having an end received in the housing presented in the nut (2), said pin (6) preventing the guide rod (3) from rotating relative to the nut (2), and means enabling said pin (6) to be moved so as to disengage it from the nut.

9. An actuator according to claim 8, **characterized in that** said means enabling said pin (6) to be moved comprise a follower gearwheel (7) suitable for sliding along a control rod (8) designed to drive it in rotation.

10. An actuator according to claim 8, **characterized in that** the pin terminates in a lever-forming arm (17) on which a prestressed spring (23) exerts a tilting torque, motor-driven means (19, 22) enabling said arm to be released for tilting.

11. An actuator on board a vehicle, such as an aircraft, in particular, the actuator being **characterized in that** it constituted by an actuator according to any preceding claim.

## Patentansprüche

1. Elektromechanische Betätigungseinrichtung mit einer Spindel (1), die in Drehung versetzt wird, einer Buchse (2), die durch die Drehung der Spindel (1) translatorisch bewegt wird, einer Leitstange (3), die durch die Buchse (2) translatorisch bewegt wird, **dadurch gekennzeichnet, dass** sie mehrere Walzen (4, 5) umfasst, die zwischen die Leitstange (3) und die Buchse (2) geschaltet sind, wobei die Walzen (4, 5) eine Abfolge von ringförmigen Vertiefungen und Stegen aufweisen, während die Außenfläche der Buchse (2) und die Innenfläche der Leitstange (3) mehrere komplementäre Vertiefungen und Stege aufweisen, die Vertiefungen und Stege der Walzen (4, 5) mit den Vertiefungen und Stegen der Buchse (2) und der Leitstange (3) zusammenwirken, um über die Buchse (2) die axiale Kraft auf die Leitstange (3) zu übertragen, wenn die Walzen (4, 5) sich in einer nichtausgekoppelten Position befinden, die Buchse (2) und/oder die Leitstange (3) Rillen für die Auskopplung (2a) aufweisen, deren Winkelposition so festgelegt ist, dass sie mit derjenigen der Walzen (4, 5) zusammenfallen, wenn sie ausgekoppelt werden, die Rillen so gestaltet sind, dass sie das Lösen von wenigstens einigen der Vertiefungen und Stege ermöglichen, um die Leitstange (3) bei der translatorischen Bewegung in Bezug auf die Buchse (2) freizugeben, und die Betätigungsvorrichtung. Mittel umfasst, die es ermöglichen, die Walzen (4, 5) aus ihrer nichtausgekoppelten Position in ihre ausgekoppelte Position zu bewegen.

2. Betätigungseinrichtung nach Anspruch 1, **gekennzeichnet durch** ein Zwischenteil (11), das mehrere Käfige (12) aufweist, in denen die Walzen aufgenommen werden.

3. Betätigungseinrichtung nach Anspruch 2, **dadurch gekennzeichnet, dass** sie drei Walzen (4, 5) pro Käfig (12) umfasst, von denen sich in ihrer nichtausgekoppelten Position zwei (4) auf der Innenfläche der Leitstange (3) abstützen, während sich die dritte Walze (5) auf der Außenfläche der Buchse (2) abstützt, wobei die Vertiefungen und Stege der dritten Walze (5) mit den Vertiefungen und Stegen der beiden anderen Walzen (4) zusammenwirken.

4. Betätigungseinrichtung nach Anspruch 2 oder 3, **dadurch gekennzeichnet, dass** das Zwischenteil (11) einen Abschnitt (S) aufweist, der sich über die Leitstange (3) hinaus erstreckt und der mit den Mitteln zusammenwirkt, die ein Schieberad (7, 8) bilden und es ermöglichen, dass das Zwischenteil (11) und die Walzen aus der ausgekoppelten Position in die nichtausgekoppelte Position schwenken.

5. Betätigungseinrichtung nach Anspruch 4, **dadurch gekennzeichnet, dass** sie einen oder mehrere Bolzen (10) umfasst, die sich radial über die Leitstange (3) hinaus erstrecken und deren Ende in einer Aussparung der Buchse (2) aufgenommen wird, wobei der oder die Bolzen (10) die Drehung der Leitstange in Bezug auf die Buchse verhindern.

6. Betätigungseinrichtung nach einem der Ansprüche 1 bis 3, **dadurch gekennzeichnet, dass** das Zwischenteil Mittel umfasst, die eine Feder (16) bilden und die auf die Walzen (4) eine radiale Kraft ausüben, die dazu dient, sie in die Auskopplungsrillen der Leitstange oder der Buchse zurückzustoßen.

7. Betätigungseinrichtung nach Anspruch 6, **dadurch gekennzeichnet, dass** die Rillen in der Innenfläche der Leitstange (3) gefertigt sind.

8. Betätigungseinrichtung nach Anspruch 6 oder 7, **dadurch gekennzeichnet, dass** sie einen Dorn (6) umfasst, der sich über die Leitstange hinaus erstreckt und dessen Ende in einer Aussparung in der Buchse (2) aufgenommen wird, wobei der Dorn (6) die Drehung der Leitstange (3) in Bezug auf die Buchse (2) verhindert, wobei Mittel vorgesehen sind, die es erlauben, den Dorn (6) zu verschieben, um ihn in Bezug auf die Leitstange zu lösen.

9. Betätigungseinrichtung nach Anspruch 8, **dadurch gekennzeichnet, dass** die Mittel, die das Verschieben des Dorns (6) ermöglichen, ein Schiebefolgerad (7) umfassen, das geeignet ist, entlang einer Steuerstange (8) als Mitnehmer für die Drehung verschoben zu werden.

10. Betätigungseinrichtung nach Anspruch 8, **dadurch gekennzeichnet, dass** der Dorn das Ende eines Armes (17) ist, der einen Hebel bildet, über den eine vorgespannte Feder (23) ein Kippmoment auf angetriebene Mittel (19, 22) ausübt, die es ermöglichen, die Freigabe der Kippung des Arms zu steuern.

11. Betätigungseinrichtung, die in einer mobilen Maschine eingebaut ist, insbesondere für die Luftfahrt, **dadurch gekennzeichnet, dass** sie aus einer Betätigungseinrichtung nach einem der vorangehenden Ansprüche gebildet ist.
